# EUROPEAN PATENT SPECIFICATION

(11) **EP 1 110 355 B1**
(45) Date of publication and mention of the grant of the patent: **15.08.2007**
(21) Application number: 00947895.9
(22) Date of filing: 29.06.2000
(51) Int. Cl.: H04L 12/66, H04M 7/00, H04Q 7/38

(54) **VOICE-OVER-IP GATEWAY**
VOICE-OVER-IP GATEWAY
PASSERELLE VOCALE SUR L'INTERNET

(30) Priority: 01.07.1999 US 141815 P
(43) Date of publication of application: 27.06.2001
(73) Proprietor: Koninklijke Philips Electronics N.V., 5621 BA Eindhoven (NL)
(72) Inventor: SINHA, Atul, NL-5656 AA Eindhoven (NL)
(74) Representative: Damen, Daniel Martijn
(86) International application number: PCT/EP2000/006081
(87) International publication number: WO 2001/003392

(56) References cited:
- WO-A-98/11704
- WO-A-98/37665
- WO-A-99/05830

## Description

This application claims the benefit of U.S. Provisional Application No. 60/141,815, filed 07/01/99, Attorney Docket PHA 23,720P.

### BACKGROUND OF THE INVENTION

### 1. Field of the Invention

This invention relates to the field of communications, and in particular to wireless telephones and TCP/IP addressing

### 2. Description of Related Art

The use of wireless telephones, such as cellular and satellite telephones, continues to increase. One of the difficulties with the use of cellular telephones is the incompatibility of telephones in different parts of the world. A telephone that is compatible with the cellular communications system in the United States, for example, would not be compatible with the cellular communications system in Europe. Satellite systems have been developed that use a common communications technique worldwide, but these systems are typically more expensive to deploy and maintain than conventional land-based systems.

One of the other difficulties with telephone systems, in general, is the variety of systems that are used to provide telephone communications. Cellular telephones are separate and distinct from conventional wired telephone systems such as those used in a home or office. The telephone system used in an office environment is often substantially different from a system used at home. This variety provides different capabilities for different applications, but also introduces the requirement to learn how to use the variety of capabilities. Often, for example, calls are inadvertently disconnected when a less experienced person attempts to forward a call to another party in an office environment. Often, an infrequent cellular telephone user forgets to press the "send" button, and waits idly for the call to go through.

The existence of the variety of different telephone communication systems can also make it more difficult to contact someone. An average person is typically associated with two or more different telephone numbers: a home phone number, an office phone number, a cellular phone number, a beeper phone number, and so on. Contacting the person often requires calling these different numbers until the person is reached. Similarly, each of these different telephone numbers will typically have an associated message recording capability, and to determine whether he or she has received a message, the person must contact each of the message recording means associated with the variety of telephone numbers.

In like manner, the person's "service profile" is created and maintained on each of the variety of services independently. If the person desires to use the same speed dial numbers on his or her cell phone, home phone, and office phone, for example, the telephone numbers and corresponding speed dial number must be entered into each system.

If a person changes one of his or her associated telephone numbers, as is often caused by a change of cellular service provider, the person must notify each of his or her acquaintances. Some of these acquaintances will then have to update their two or three speed dial lists. If the changed telephone number is associated with a business, the change will typically necessitate a reprinting of office stationary, business cards, and so on. These telephone-change induced problems often prevent the person from taking advantage of potentially more economical service plans, because the potential savings are offset by the ancillary costs and inconveniences caused by a telephone number change.

Cellular telephone systems have an additional disadvantage in that the service is specific to a particular telephone instrument. A very small cellular telephone instrument is convenient for travel, but may not be suitable for extended use in an office environment. Existing cellular systems, however, do not allow two different telephone instruments to be associated with the same telephone number. To gain the convenience of a small portable telephone instrument and a larger office telephone instrument, a person must incur the cost of two individual telephone accounts, and must incur the aforementioned inconveniences associated with multiple telephone numbers.

Application programs are available that allow telephone, facsimile, and videoconferencing via the Internet. Generally, this adds yet another number or identifier to the list of telephone numbers associated with an individual.

Some of the inconveniences of multiple telephone numbers may be overcome by using call-forwarding on select lines to forward all incoming calls to a single number, but there is often a cost associated with such a call-forwarding option.

International Patent Application WO98/11704 to Dialnet Inc, discloses a dedicated appliance for packet-switched voice communication. The appliance does not require the caller and recipient parties to be already linked to the packet-switched network to initiate communication. Modes of operation are disclosed which use a conventional long-distance telephone call to cause the appliance to initiate a connection with its own packet-switched network service provider. Therefore, access to the packet-switched network is dependent on geographical characteristics of the telephone call.

### BRIEF SUMMARY OF THE INVENTION

It is an object of this invention to provide a telephone service that can be used world-wide. It is a further object of this invention to provide a consistent telephone interface regardless of the provider of the telephone service.

These object and others are achieved by providing a gateway device that couples a mobile telephone with a data network, such as the Internet, for voice communications.

In a first aspect of the present invention there is provided a method for establishing a voice call from a mobile telephone to a called party via a data network, the method comprising:
- establishing a direct wireless communications link with the mobile telephone when said mobile telephone is located outside the roaming range of its respective mobile service;
- providing access to the data network;
- providing means for switching and routing of voice call communication messages over the data network; and
establishing the voice call by routing messages from the mobile telephone to the called party using the means for switching and routing.

In a second aspect of the present invention there is provided a method for establishing a voice call at a mobile telephone received from a calling party via a data network, as defined in appended claim 2 to which the reader is referred.

In further aspects of the present invention there are provided gateway devices arranged to directly wirelessly communicate with a mobile telephone and to establish voice calls to a another party via a data network, as defined in appended claims 7 and 8 to which the reader is referred.

The gateway device is configured to provide a consistent interface with a user of the voice communications facility, independent of the method of user-access to the gateway device, and independent of the access to the data network. The gateway device allows for user-access from both wired and wireless telephone instruments, and provides the user a consistent service profile, independent of the location of the user at the time of access. The gateway device provides a service, such as a conventional "Voice over the Internet" (VoIP) application, that allows the user to place and receive telephone calls to other VolP users, or to conventional telephone service users. In a preferred embodiment, the user may use a portable gateway device, such as a laptop or handheld computer, to gain access to the data network, or may use publicly available multiple-user gateway devices that are located at airports, hotels, train and bus stations, within transport vehicles such as airplanes, trains, buses, automobiles, and so on. Upon access, the user's service profile, including speed-dial numbers and the like, are provided to the user, via the gateway device currently being used.

### BRIEF DESCRIPTION OF THE DRAWINGS

The invention is explained in further detail, and by way of example, with reference to the accompanying drawings wherein:
FIG. 1 illustrates an example block diagram of a gateway device in accordance with this invention.
FIG. 2 illustrates an example block diagram of a communications system that uses gateway devices in accordance with this invention

Throughout the drawings, the same reference numerals indicate similar or corresponding features or functions.

### DETAILED DESCRIPTION OF THE INVENTION

The invention addresses offering a user a phone service, which he/she can access from anywhere and at anytime in the world through a single personalized device (phone). Ther characteristics of this service include a universal phone service while traveling, at a conference, at work, at home, etc.; access to the service through a single wireless device, i.e., no need to use a plurality of phone devices; a single access identifier, e.g., phone number; a single personalized service profile: mailbox, call filters, synchronization with calendar, etc.

In order to offer such a service, one faces the following problems. There are many different standards for mobile telephony infrastructure in different parts of the world. Therefore, a user cannot use a single phone with a single transceiver all over the world. "Iridium" tries to address this problem by offering a satellite-based mobile communication infrastructure, which covers the entire world as an overlay network. This service is too expensive for the consumer and does not scale to consumer level. Another problem relates to the user having to access the phone service through different phone devices at home, at work, on travel, etc. Each of these devices has a different user interface for accessing the respective service features. For example, forwarding a call at work requires the user to interact with his/her work phone in a way different from a that for forwarding a call from his/her mobile. Still another problem relates to the fact that an individual user does not have a single unique access identifier, e.g., a phone number. Instead, the user has to deal with many different phone numbers based on whether he/she is using the phone at home, or the phone in the office work, or the mobile phone while traveling, etc. Also if a user changes his access service provider, then the phone number changes as well. There are regulators working on solving this problem through regulatory steps, e.g., OFTEL in UK, but there is no general practical solution in place. Yet another problem is that a user does not have a single service profile, but different profiles at home, at work, etc. Also these profiles are not synchronized.

Many of the above problems have been solved, within another context, on Internet Protocol (IP) based networks, Intranets and Internet for data services. There is a standard IP-based infrastructure all over the world that also scales to the consumer level. A user can access a single service through a single user interface all over the world. Moreover, a user can have a single access identifier, email address, with which he/she can send and receive emails, regardless of his/her geographic location. Further, a user can have a single service profile, anywhere.

The inventor now proposes to solve the above problems within the context of telephony by offering the phone service on IP based network with the same service provisioning concepts and allowing a user to access the service through a single mobile phone device from all over the world. This requires a gateway to interconnect the mobile device with the IP-based fixed network. A call from a first phone device to a second phone device traverses a first gateway to the IP network and a second gateway from the IP network to the second phone device. A directory server and a profile server are available on the IP network. An implementation model for such a service uses, e.g., a wireless link between the phone and the gateway. The link is based on, e.g., the evolving Bluetooth standard indoors and the evolving UMTS standard outdoors, or on any other method.

An evolution scenario for arriving at an indoors wireless infrastructure is described below by way of example. It does not address the outdoors wireless infrastructure. Note that a phone device would need two transceivers, one for indoors wireless access, and the other for outdoors wireless access. The first phase in the evolution scenario is to allow a user of a wireless phone to access the phone service outside the roaming range of the respective mobile service. This is typically needed when the user is travelling. A simple solution is provided by a wireless link access from a mobile phone device to a gateway on the IP network, and via a multi-call gateway component from the IP network to a conventional mobile phone service network. In this scenario the gateway between the phone device and the IP network includes, e.g., a PC with the respective hardware and software functionalities. A business traveler typically has a PC, which can be equipped with the gateway. Also in this phase, the wireless access link could be implemented with the outdoors wireless link method with reduced transmission power for very short distances (few meters). In the next step, the gateway could be installed in public places most visited by business travelers, e.g., airports, hotels, conference facilities, etc. In this phase a universal standard indoors wireless access method would be required, e.g., Bluetooth. Therefore, the phone device would have two separate transceivers for indoors and outdoors access. In next phases the above gateway could also be installed at the work place and then at home as well.

This invention is based on the observation that computer communication systems using an IP or similar networking protocol can be configured to provide data to each connected IP address, independent of the physical location of the device associated with the IP address. A business traveler can, for example, access the Internet to retrieve his or her e-mail, regardless of where the traveler happens to be located. The same computer device and user interface that the traveler uses in the United States can be used to access the Internet in Europe. The traveler can use a small laptop or palmtop device to access e-mail while traveling, and a larger desktop device to access e-mail while at the office, and a web-TV device to access e-mail at home. Services are available that allows the same e-mail address to be used regardless of the provider of the Internet access service. The user interface with the Internet can also be provided independent of the provider of the Internet access service. The user can configure a browser or e-mail program to access different service providers, depending upon location, yet the interface to the browser or e-mail program remains the same. In like manner, the user's Internet interface can be located at a globally accessible site within the data network, so that this same interface can be accessed by the user, regardless of the device used to access the Internet.

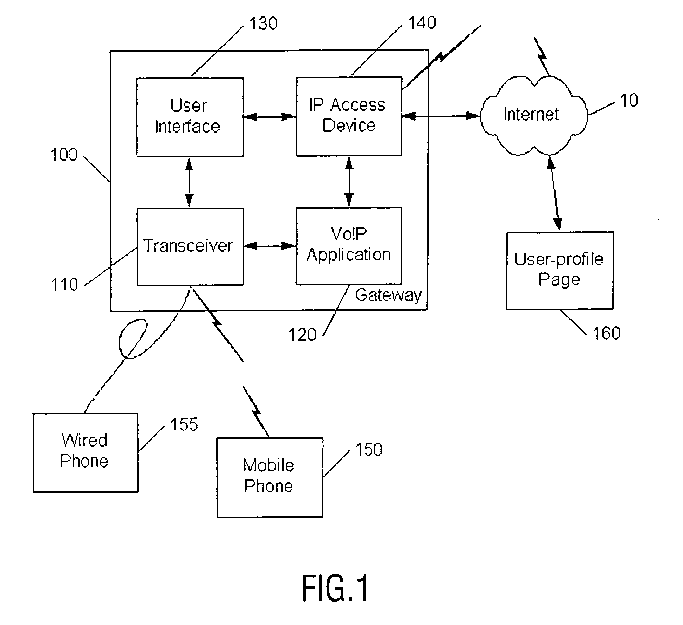

The same globally accessible common user interface, and common service profile, can be provided to telephone users by coupling the telephone instruments typically used by a user, and in particular, mobile telephone instruments, into a data network that facilitates such a globally accessible interface. FIG. 1 illustrates an example block diagram of a gateway device 100 that provides access to a data network, exemplified by the Internet 10, for at least voice communications. The example gateway 100 includes a transceiver 110 and a conventional "voice over IP" (VoIP) application 120 that facilitates voice communications over an IP data network 10 via an IP access device 140, such as a modem. In accordance with this invention, the transceiver 110 is configured to provide access to the VoIP application 120 from a mobile telephone instrument 150. In a preferred embodiment, the transceiver 110, or another transceiver, also provides access to the VoIP application 120 from a wired telephone instrument as well. For ease of reference, the term "mobile telephone" is used herein to refer to conventional cellular or satellite communication systems, and corresponding telephone instruments that do not, per se, have a "fixed" location. "Wired telephone", on the other hand, refers to telephone systems that provide service to fixed locations, typically via wires or cables; wireless telephones that communicate to such systems via a base station at the fixed location are included herein as "wired" telephone instruments. Also for ease of reference, a "telephone instrument" is defined herein as any device or combination of devices that are capable of transforming voice input into electrical signals and incoming electrical signals into an audible output.

As is known in the art, a VoIP application 120 transmits and receives telephone calls using a unique IP address that is associated with each user. Conventionally, a VoIP application 120 uses the audio capabilities of the computer upon which it is running, or a wired telephone instrument 155 that is attached to the computer, to receive and transmit the audio information from and to the user. The conventional VoIP application provides features to the user via a user interface 130 that includes, for example, speed-dialing, voice-directed-dialing, address book, directory of commonly called numbers, and so on, hereinafter termed a user-profile. As discussed above, a typical VoIP installation adds yet another "telephone number" (in this case an IP address) to the multitude of numbers associated with a typical user.

In accordance with this invention, however, the transceiver 110 is configured to interact with the mobile telephone 150 in the same manner as a cellular or satellite system interacts with a mobile telephone, thereby providing an access mode that is "transparent" to the user, and, when adopted by service providers, will be "transparent" to a person calling the user using the user's mobile telephone number. The invention is presented hereinafter as a two-phase embodiment of capabilities. In the first phase, the user is provided access to a data network from a mobile telephone for initiating telephone calls from the mobile telephone, and for receiving telephone calls placed to the user's IP address, via for example, another VoIP application. In the second phase, public telephone providers route calls placed to a conventional telephone number to an IP address corresponding to that telephone number. The first phase provides a number of advantages to a user, independent of whether or when the second phase is implemented, as discussed below.

Consider the installation of gateway 100 in a user's office computer and home computer. In a preferred embodiment, the user-profile is located at a user-profile page 160 on the data network, so that it can be accessed from either the user's office computer or home computer as required. When the user is within range of the office computer or the home computer, the mobile phone 150 provides identical features and capabilities to the user, regardless of the particular location (home or office) of the user. New contact telephone numbers that are added to the user-profile, for example, are subsequently available to the user at either location, and the same options are provided to the user at either location. In a preferred embodiment, the user-profile page may be partitioned by the user into sub-profiles, to facilitate the organization of the information contained in the page, yet each sub-profile is available for use from either location, as required.

Consider now the installation of the gateway 100 in a user's portable computer. Whenever the portable computer is provided access to the data network 10, the user can use the mobile phone 150 to place calls via the data network 10, using an identical interface, and having access to the same user-profile, as in the user's home or office. Note that this capability extends to overseas locations, because, unlike telephone protocols and standards, the IP protocol is independent of national boundaries. A user traveling to Europe, for example, can use his or her US-compatible mobile telephone, via an access to the data network 10 from the user's portable computer.

Note that the user-dependent information in a preferred embodiment is located on the user-profile page 160, or within the mobile phone 150. Therefore, the gateway 100 is user-independent, and need not be directly associated with a particular user. In an office environment, for example, the gateway 100 may be located at a central server, and contain multiple transceivers 110 to service simultaneous users. Such multi-user gateways 100 may also be located in public areas, such as airports and train or bus stations, hotels, within trains, buses, and planes, and so on. Whenever a user is within the vicinity of such a gateway 100, the user will be provided the same interface, and the same set of user-dependent and user-independent features and options.

To effect this first phase, the mobile telephone 150 is configured to recognize when it is in the vicinity of a gateway 100. Mobile telephones are currently available that include a variety of communication capabilities, such as digital or analog cellular capabilities, local "walkie-talkie" capabilities, and the like. In phase one of the embodiment of this invention, an additional communication capability can be added to the mobile telephone 150, and the mobile telephone 150 can be configured to automatically switch to this additional communication whenever it detects the presence of a gateway 100. The same techniques used to select a digital mode over analog mode whenever the mobile telephone 150 detects the presence of a digital-compatible cell in a cellular system can be used to effect this automatic switch, giving overall selection preference to communications with the gateway 100. Preferably, the transceiver 110 uses the same communication protocol as that provided by the cellular or satellite service provider, and automatically "captures" the mobile phone 150 when a call is initiated in its vicinity. For example, in a conventional cellular system, the mobile phone 150 initially issues a channel request. The cell(s) within range of the mobile phone 150 respond with a channel allocation, typically by assigning the mobile phone 150 a particular CDMA code and time-slot allocation. When the mobile phone 150 responds with that CDMA code in the appropriate time-slot, communication is established. The mobile phone 150 responds to only one cell; cells that do not receive a response using their allocated CDMA code and time-slot are configured to deallocate the code and time-slot, for subsequent allocation to another mobile phone 150. In a preferred embodiment, the transceiver 110 communicates the appropriate response to the request by the mobile telephone 150, and that response serves to notify the mobile telephone 150 that it is in the vicinity of the gateway 100. In this preferred embodiment, the initial communication by the mobile telephone 150 may be, for example, a "send" request without a corresponding telephone number, that instructs any gateway 100 within its vicinity to respond.

The gateway 100 preferably transmits a periodic pilot signal, to which the mobile telephone 150 responds, regardless of whether a new call is being placed. In this manner, the gateway 100 can be aware that a recipient exists for messages that are addressed to the user's IP address. Note that, in accordance with this invention, multiple telephone instruments 150, 155, etc. can be assigned the same user IP address. Messages addressed to the IP address will be routed to whichever instrument 150, 155 "answers first", similar to "rollover" telephone exchanges, or to conventional e-mail servers.

When communication is commenced by the mobile telephone 150, via the dedicated communication capability, or via conventional mobile communications on a channel allocated by the gateway 100, the gateway 100 provides the features of the user interface 130 to the connected telephone 150, including the features and data associated with the user-profile page 160, as discussed above.

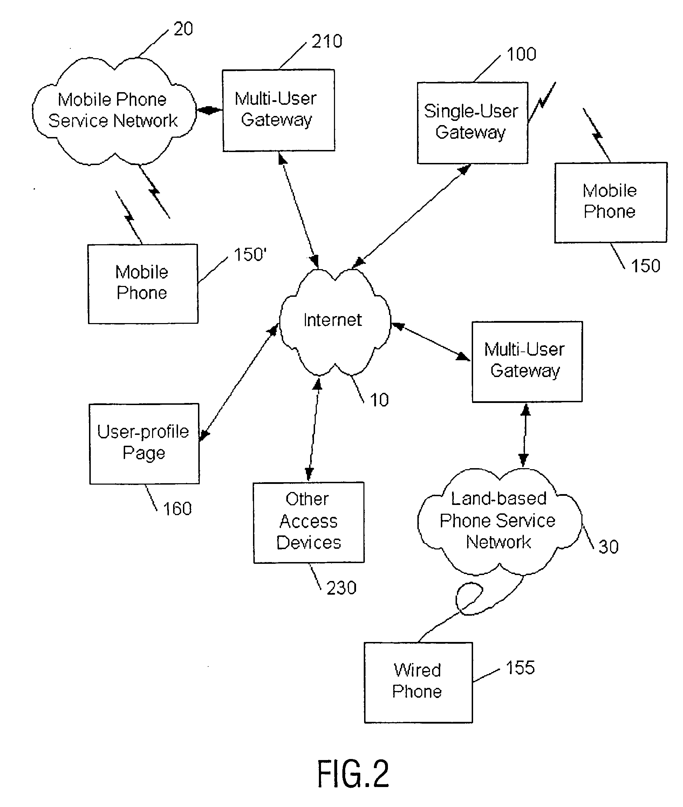

FIG. 2 illustrates an example block diagram of a communications system 200 in accordance with the second phase of this invention. In this phase, the public telephone providers are integrally coupled to the data network 10 via a multi-user gateway 210. A mobile telephone 150' is illustrated in FIG. 2 as being coupled to a mobile telephone service network 20, presumably being out of range of a local gateway 100. The gateway 210, being connected to the data network 10, has access to the user-profile page 160. In accordance with this aspect of the invention, the gateway 210 is configured to provide the user of the mobile telephone 150', via the mobile telephone service network 20, the same interface that the user is provided when the mobile telephone 150' is in the vicinity of a local gateway 100. In like manner, the gateway 210 is used to couple the land-based telephone service network 30 to the data network 10. In this manner, the user can be provided the same interface when the user uses a wired telephone 155. In a preferred embodiment, particular telephone instruments 155, or particular locales of telephone instruments, such as the user's home, may be pre-associated with the user, so that the user is provided immediate access to the interface and user-dependent information whenever the associated instrument 155 is used. Additionally, a user may dial into the land-based telephone service network 30, or the mobile telephone service network 20, from an arbitrary telephone instrument and provide a user identification code. Thereafter, the telephone service network 20, 30 provides the user with the user interface associated with the user identification, based on the particular user-profile 160.

The configuration of FIG. 2 also allows the telephone service network 20, 30 to route incoming calls to corresponding IP addresses. Using the same techniques that are commonly used by cellular telephone providers to locate a particular mobile telephone, and techniques that are commonly used to determine the presence of a particular user on the Internet, the networks 20, 30 are configured to locate a currently accessible instrument that is associated with an incoming destination telephone number. This search for an accessible instrument includes a search of the data network for an instrument that is associated with the IP address that corresponds to the destination telephone number. The telephone connection is made to the first instrument that responds to the search request. If a currently accessible telephone instrument is not located, a "please-leave-a-message" response is provided to the calling party, preferably based on the user-profile page 160. In a preferred embodiment, a user may have a personal phone number and a business phone number, and the user-profile page 160 is configured to provide a different response message based upon which phone number was called. In a preferred embodiment, the corresponding voice- mail messages are also stored on the data network 10, and are thereby accessible by the user from any gateway 100, 210, or other access device 230.

## Claims

1. A method for establishing a voice call from a mobile telephone to a called party via a data network using a gateway device to interconnect the mobile phone to the data network, the method comprising in the gateway the steps of:
- performing the function of a radio base station for providing a short range direct wireless link compatible with the mobile telephone and controlling the communication with the mobile telephone when said mobile telephone is located outside the roaming range of its respective mobile service;
- providing access to the data network;
receiving a request to establish voice communications to the mobile telephone over the data network or from the mobile telephone over the short range direct wireless link; and
- establishing the voice call by switching and routing messages to or from the mobile telephone from or to the called party over both the data network and the short range direct wireless link.

2. The method of claim 1, further including
- accessing a user profile (160), associated with a user of the mobile telephone, that is located on the data network (10), and
- establishing the voice call in dependence upon this user profile (160).

3. The method of claim 1, wherein the data network comprises the internet.

4. The method of claim 3, wherein the means for switching and routing is configured to provide a communication path between the mobile telephone (150) and the Internet, based on an IP address associated with the mobile telephone (150) or other party telephone (150', 150).

5. The method of claim 3, further including providing a user-dependent interface (130) to the mobile telephone (150), based on a user-profile (160) that is accessible via the Internet.

6. A gateway device (100, 210) arranged for establishing a voice call from a mobile telephone to a called party via a data network using the gateway device to interconnect the mobile phone to the data network, the gateway comprising:
- a network access device (140) arranged to access the data network;
- means for receiving a request to establish voice communications to the mobile telephone over the data network or from the mobile telephone over the short range wireless link;
- an application (120) arranged to switch and route voice communications to or from the mobile telephone from or to the called party over both the data network and the short range-direct wireless link; and
- a transceiver (110) arranged to perform the function of a radio base station for providing a short range direct wireless link compatible with the mobile phone and controlling the communication with the mobile telephone when said mobile telephone is located outside the roaming range of its respective mobile service.

7. The gateway device (100,210) as claimed in claim 6, comprising a portable device.

8. The gateway device (100, 210) as claimed in claim 7, comprising a laptop or handheld computer.

9. The gateway device (10, 210) of any of claims 6 to 8, wherein the network access device (140) accesses an Internet network.

10. The gateway device (100, 210) of claim 9, wherein the application (120) is configured to switch and route messages via an IP address that is associated with the mobile telephone (150) or other party telephone (150', 155).

11. The gateway device (100, 210) of any of claims 6 to 8, further including a user interface application (130) that is configured to provide a user-dependent interface to a user of the mobile telephone (150), based on a user-profile (160) that is accessible via the data network (10).

## Patentansprüche

1. Verfahren zum Aufbauen eines Sprachanrufs von einem Mobiltelefon zu einem angerufenen Teilnehmer über ein Datennetz unter Verwendung einer Gatewayeinrichtung, um das Mobiltelefon mit dem Datennetz zu verbinden, wobei das Verfahren im Gateway die folgenden Schritte umfasst:
- Ausüben der Funktion einer Funkbasisstation zum Bereitstellen einer direkten drahtlosen Verbindung kurzer Reichweite, die mit dem Mobiltelefon kompatibel ist, und Steuern der Kommunikation mit dem Mobiltelefon, wenn sich das Mobiltelefon außerhalb des Roamingbereichs seines jeweiligen Mobilfunkdienstes befindet;
- Bereitstellen von Zugang zum Datennetz;
- Empfangen einer Anforderung zum Aufbauen von Sprachkommunikation mit dem Mobiltelefon über das Datennetz oder vom Mobiltelefon über die direkte drahtlose Verbindung kurzer Reichweite; und
- Aufbauen des Sprachanrufs durch Vermitteln und Lenken von Mitteilungen zum oder vom Mobiltelefon vom oder zum angerufenen Teilnehmer über sowohl das Datennetz als auch die direkte drahtlose Verbindung kurzer Reichweite.

2. Verfahren nach Anspruch 1, ferner beinhaltend
- Zugreifen auf ein Benutzerprofil (160), das einem Benutzer des Mobiltelefons zugeordnet ist und das sich im Datennetz (10) befindet, und
- Aufbauen des Sprachanrufs in Abhängigkeit von diesem Benutzerprofil (160).

3. Verfahren nach Anspruch 1, wobei das Datennetz das Internet umfasst.

4. Verfahren nach Anspruch 3, wobei die Mittel zum Vermitteln und Lenken konfiguriert sind, einen Kommunikationspfad zwischen dem Mobiltelefon (150) und dem Internet basierend auf einer IP-Adresse bereitzustellen, die dem Mobiltelefon (150) oder dem Telefon des anderen Teilnehmers (150', 150) zugeordnet ist.

5. Verfahren nach Anspruch 3, das ferner Bereitstellen einer benutzerabhängigen Schnittstelle (130) für das Mobiltelefon (150) basierend auf einem Benutzerprofil (160) beinhaltet, das über das Internet zugänglich ist.

6. Gatewayeinrichtung (110, 210), die angeordnet ist, um einen Sprachanruf von einem Mobiltelefon zu einem angerufenen Teilnehmer über ein Datennetz unter Verwendung der Gatewayeinrichtung, um das Mobiltelefon mit dem Datennetz zu verbinden, aufzubauen, wobei der Gateway umfasst:
- eine Netzzugangseinrichtung (140), die angeordnet ist, um auf das Datennetz zuzugreifen;
- Mittel zum Empfangen einer Anforderung zum Aufbauen von Sprachkommunikation mit dem Mobiltelefon über das Datennetz oder vom Mobiltelefon über die drahtlose Verbindung kurzer Reichweite;
- eine Anwendung (120), die angeordnet ist, um Sprachkommunikation zum oder vom Mobiltelefon vom oder zum angerufenen Teilnehmer über sowohl das Datennetz als auch die direkte drahtlose Verbindung kurzer Reichweite zu vermitteln und zu lenken; und
- einen Sendeempfänger (110), der angeordnet ist, um die Funktion einer Funkbasisstation zum Bereitstellen einer direkten drahtlosen Verbindung kurzer Reichweite, die mit dem Mobiltelefon kompatibel ist, und Steuern der Kommunikation mit dem Mobiltelefon, wenn sich das Mobiltelefon außerhalb des Roamingbereichs seines jeweiligen Mobilfunkdienstes befindet, auszuüben.

7. Gatewayeinrichtung (100, 210) nach Anspruch 6, die eine tragbare Einrichtung umfasst.

8. Gatewayeinrichtung (100, 210) nach Anspruch 7, die einen Laptop- oder Taschencomputer umfasst.

9. Gatewayeinrichtung (100, 210) nach einem der Ansprüche 6 bis 8, wobei die Netzzugangseinrichtung (140) auf ein Internet-Netz zugreift.

10. Gatewayeinrichtung (100, 210) nach Anspruch 9, wobei die Anwendung (120) konfiguriert ist, Mitteilungen über eine IP-Adresse zu vermitteln und zu lenken, die dem Mobiltelefon (150) oder dem Telefon des anderen Teilnehmers (150', 155) zugeordnet ist.

11. Gatewayeinrichtung (100, 210) nach einem der Ansprüche 6 bis 8, die ferner einer Benutzerschnittstellen-Anwendung (130) beinhaltet, die konfiguriert ist, einem Benutzer des Mobiltelefons (150) eine benutzerabhängige Schnittstelle basierend auf einem Benutzerprofil (160) bereitzustellen, das über das Datennetz (10) zugänglich ist.

## Revendications

1. Procédé permettant d'établir un appel vocal d'un téléphone mobile à une partie appelée au moyen d'un réseau de données utilisant un dispositif de passerelle pour interconnecter le téléphone mobile au réseau de données, le procédé comportant dans la passerelle les étapes suivantes:
- réaliser la fonction d'une station de base de radio permettant de fournir un lien sans fil direct à courte portée compatible avec le téléphone mobile et commandant la communication avec le téléphone mobile quand ledit téléphone mobile est situé hors de la portée d'itinérance de son service mobile respectif;
- fournir un accès au réseau de données;
- recevoir une requête d'établir des communications vocales vers le téléphone mobile par le réseau de données ou à partir du téléphone mobile par le lien sans fil direct à courte portée; et
- établir l'appel vocal en commutant et en routant les messages au ou du téléphone mobile de ou à la partie appelée sur à la fois le réseau de données et le lien sans fil direct à courte portée.

2. Procédé selon la revendication 1, incluant en outre
- l'accès à un profil utilisateur (160), associé avec un utilisateur du téléphone mobile, qui est situé sur le réseau de données (10), et
- établir l'appel vocal en fonction de ce profil utilisateur (160).

3. Procédé selon la revendication 1, dans lequel le réseau de données comporte l'Internet.

4. Procédé selon la revendication 3, dans lequel le moyen permettant de commuter et de router est configuré pour fournir un chemin de communications entre le téléphone mobile (150) et l'Internet, sur la base d'une adresse IP associée avec le téléphone mobile (150) ou d'autre téléphone de partie (150', 150).

5. Procédé selon la revendication 3, incluant en outre la fourniture d'une interface dépendante de l'utilisateur (130) au téléphone mobile (150), sur la base d'un profil utilisateur (160) qui est accessible au moyen de l'Internet.

6. Dispositif de passerelle (100, 210) disposé pour établir un appel vocal d'un téléphone mobile à une partie appelée au moyen d'un réseau de données utilisant le dispositif de passerelle pour interconnecter le téléphone mobile au réseau de données, la passerelle comportant:
- un dispositif d'accès au réseau (140) disposé pour accéder au réseau de données;
- un moyen permettant de recevoir une requête pour établir des communications vocales au téléphone mobile par le réseau de données ou du téléphone mobile par le lien sans fil à courte portée;
- une application (120) disposée pour commuter et router les communications vocales au ou du téléphone mobile de ou à la partie appelée sur à la fois le réseau de données et le lien sans fil direct à courte portée; et
- un émetteur-récepteur (110) disposé pour réaliser la fonction d'une station de base de radio pour fournir un lien sans fil direct à courte portée compatible avec le téléphone mobile et commandant la communication avec le téléphone mobile quand ledit téléphone mobile est situé hors de la portée d'itinérance de son service mobile respectif.

7. Dispositif de passerelle (100, 210) selon la revendication 6, comportant un dispositif portable.

8. Dispositif de passerelle (100, 210) selon la revendication 7, comportant un ordinateur portable ou un ordinateur de poche.

9. Dispositif de passerelle (100, 210) selon l'une quelconque des revendications 6 à 8, dans lequel le dispositif d'accès au réseau (140) accède à un réseau Internet.

10. Dispositif de passerelle (100, 210) selon la revendication 9, dans lequel l'application (120) est configurée pour commuter et router les messages au moyen d'une adresse IP qui est associée au téléphone mobile (150) ou à d'autre téléphone de partie (150', 150).

11. Dispositif de passerelle (100, 210) selon l'une quelconque des revendications 6 à 8, incluant en outre une application d'interface utilisateur (130) qui est configurée pour fournir une interface dépendante de l'utilisateur à un utilisateur du téléphone mobile (150), sur la base d'un profil utilisateur (160) qui est accessible au moyen du réseau de données (10).
